# EUROPÄISCHE PATENTSCHRIFT

(11) **EP 1 717 499 B1**
(45) Veröffentlichungstag und Bekanntmachung des Hinweises auf die Patenterteilung: **09.07.2008**
(21) Anmeldenummer: 05028025.4
(22) Anmeldetag: 21.12.2005
(51) Int. Cl.: F16K 31/00, G05D 23/13

(54) **Ventil**
Valve
Soupape

(30) Priorität: 27.04.2005 DE 102005019525
(43) Veröffentlichungstag der Anmeldung: 02.11.2006
(73) Patentinhaber: Gustav Wahler GmbH u. Co.KG, 73730 Esslingen (DE)
(72) Erfinder: Weiss, Rainer, 72351 Geislingen (DE); Wenneis, Wolffried, Dr., 68161 Mannheim (DE)
(74) Vertreter: Kratzsch, Volkhard

(56) Entgegenhaltungen:
- EP-A- 0 023 997
- EP-A- 0 286 810
- EP-A- 0 908 809

## Beschreibung

Die Erfindung bezieht sich auf ein Ventil, insbesondere thermostatisches Ventil, der im Oberbegriff des Anspruchs 1 genannten Art.

Bei einem bekannten Ventil dieser Art (EP 0 908 809 A1) kann das Ventilglied auf dem metallischen Betätigungselement auch aus Kunststoff hergestellt werden, so dass dadurch das Ventilglied und das metallische Betätigungselement derart in Bezug zueinander elektrisch isoliert sind, dass die Bildung eines galvanischen Elements zwischen diesen unterbunden ist.

Ein Ventil gemäß EP 0 286 810 B1 weist auf dem Gehäuse eines thermostatischen Betätigungselements ein Ventilglied auf, welches als Träger einen metallischen Ventilteller hat, der auf beiden Seiten mit einer Schicht aus einem elastischen Material, insbesondere einem Elastomer, zur Abdichtung gegenüber einer Ventilsitzfläche eines Ventilgehäuses versehen ist. Derartige Ventile und damit ausgestattete thermostatische Betätigungselemente haben sich bewährt. Aufgrund so gestalteter Ventilglieder lassen sich die Leckagen hinsichtlich des zu steuernden Mediums sehr gering halten. Beim Einsatz eines derartigen thermostatischen Ventils in einem Kühlmittelkreislauf einer Brennkraftmaschine führt dies zur Verkürzung der Warmlaufzeit der Brennkraftmaschine. Es hat sich gezeigt, dass die auf dem Träger, insbesondere Ventilteller, durch Vulkanisation aufgebrachte Schicht aus elastischem Material, zum Beispiel einem Elastomer, nicht dauerhaft haftet sondern sich vorzeitig ablöst. Dabei wurde festgestellt, dass dies dadurch bedingt ist, dass sich bei elektrisch leitender Verbindung zwischen dem Ventilglied und dem Betätigungselement, insbesondere dessen Gehäuse, unter der Mitwirkung des zu steuernden Mediums ein elektrochemisches Potential entwickelt und somit ein galvanisches Element bildet, das einen elektrischen Strom zur Folge hat, der zwischen dem Ventilglied und dem Betätigungselement, insbesondere dessen Gehäuse, fließt. Aufgrund dessen wird die üblicherweise für die Haftverbindung der elastischen Schicht auf den Träger des Ventilgliedes aufgetragene Haftvermittlerschicht aufgelöst und verliert dadurch ihre Funktion, so dass sich die elastische Schicht ablöst.

Der Erfindung liegt die Aufgabe zugrunde, ein Ventil, insbesondere thermostatisches Ventil, zu schaffen, bei dem das vorzeitige Ablösen der Schicht aus elastischem Material des Ventilgliedes in einfacher und kostengünstiger Weise vermieden ist und dadurch eine längere Betriebsdauer und Lebensdauer erreicht wird.

Die Aufgabe ist bei einem Ventil der eingangs genannten Art gemäß der Erfindung durch die Merkmale im Anspruch 1 gelöst. Weitere vorteilhafte Erfindungsmerkmale und Ausgestaltungen dazu ergeben sich aus den Unteransprüchen. Durch die Erfindung ist in einfacher Weise erreicht, dass die Bildung eines galvanischen Elements zwischen dem Ventilglied und dem Betätigungselement unterbunden ist. Somit ist ein Stromfluss zwischen beiden verhindert und damit die Gefahr der Ablösung der elastischen Schicht des Ventilgliedes von dessen Träger. Demzufolge ist die Lebensdauer des Ventils und nutzbare Betriebsdauer gesteigert. Der Aufwand zur Vermeidung der Bildung eines galvanischen Elements ist gering und fällt praktisch nicht ins Gewicht. Das so gestaltete Ventil ist einfach und betriebssicher.

Weitere Einzelheiten und Vorteile der Erfindung ergeben sich aus der nachfolgenden Beschreibung.

Der vollständige Wortlaut der Ansprüche ist vorstehend allein zur Vermeidung unnötiger Wiederholungen nicht wiedergegeben, sondern statt dessen lediglich durch Hinweis auf die Ansprüche darauf Bezug genommen, wodurch jedoch alle diese Anspruchsmerkmale als an dieser Stelle ausdrücklich und erfindungswesentlich offenbart zu gelten haben.

Die Erfindung ist nachfolgend anhand von in der Zeichnung gezeigten Ausführungsbeispielen näher erläutert. Es zeigen:
- Fig. 1: eine schematische, teilweise geschnittene Seitenansicht eines für ein thermostatisches Ventil vorgesehenen thermostatischen Betätigungselements gemäß einem ersten Ausführungsbeispiel,
- Fig. 2: eine schematische, teilweise geschnittene Ansicht eines Teils eines Betätigungselements entsprechend Fig. 1 gemäß einem zweiten Ausführungsbeispiel

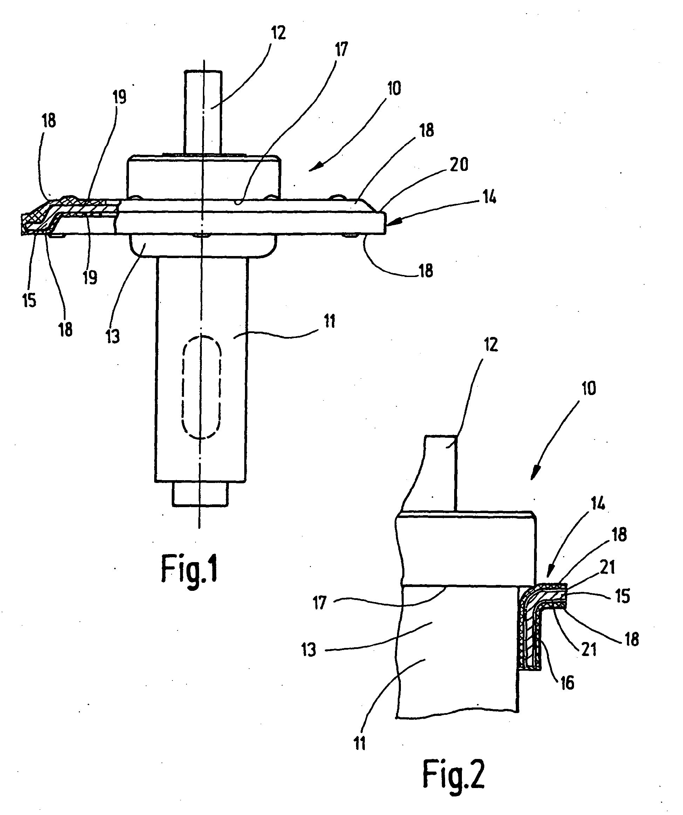

In Fig. 1 ist schematisch ein thermostatisches Bestätigungselement 10 gezeigt, das für ein nicht weiter gezeigtes Ventil, insbesondere thermostatisches Ventil, vorgesehen ist. Das Betätigungselement 10 weist in üblicher Weise ein Gehäuse 11 aus Metall, zum Beispiel Messing, auf, das im Inneren mit einem sich bei Temperaturerhöhung ausdehnenden und bei Temperaturabfall zusammenziehenden Dehnstoff, zum Beispiel Wachs, gefüllt ist, in den ein bei Temperaturerhöhung ausschiebbarer Kolben 12 eintaucht. Das Gehäuse 11 ist nach außen hin dicht abgeschlossen. Auf einem Gehäuseabschnitt 13 des Gehäuses 11 ist ein Ventilglied 14 gehalten, das hier aus einem Ventilteller 15 besteht. Das Ventilglied 14 sitzt mit einem in Fig. 1 nicht weiter gezeigten zentralen Teil, der bei Beispiel gemäß Fig. 2 zum Beispiel als Zylinderabschnitt 16 ausgebildet ist, auf dem Gehäuseabschnitt 13 und stützt sich an einer axialen Schulter 17 in der einen Richtung ab.

Der Ventilteller 15 des Ventilgliedes 14 besteht aus Metall, zum Beispiel aus rostfreiem Stahl. Das Gehäuse 11 des Betätigungselements 10 besteht ebenfalls aus Metall, wobei statt Messing auch andere Materialien zum Einsatz kommen können.

Der Ventilteller 15 des Ventilgliedes 14 ist zumindest auf einer Seite, beim gezeigten Ausführungsbeispiel gemäß Fig. 1 auf beiden Seiten, mit einer Schicht 18 aus elastischem Material beschichtet, die insbesondere aus einem Elastomer, zum Beispiel Gummi, Kunstgummi oder dergleichen, besteht. Zur Haftvermittlung zwischen dem metallischen Ventilteller 15 und der Schicht 18 ist auf den metallischen Ventilteller 15 eine Haftvermittlerschicht 19 aufgetragen. Zur Aufbringung der Schicht 18 wird der metallische Ventilteller 15 in einem Werkzeug mit dem Schichtmaterial umspritzt, das dann vulkanisiert.

Das thermostatische Betätigungselement 10 mit darauf sitzendem Ventilglied 14 wird in üblicher Weise in ein nicht gezeigtes Ventilgehäuse eingebracht, das im Bereich des Ventilgliedes 14 eine zum Betätigungselement 10 koaxiale und etwa ringförmige Ventildurchflußöffnung enthält, die eine innere ringförmige Anlagefläche für den äußeren Randteil 20 des Ventilgliedes 14 bildet, der mit einer zugeordneten Fläche an dieser ringförmigen inneren Anlagefläche des Ventilgehäuses in der Schließstellung zur Anlage kommt beziehungsweise in der Öffnungsstellung davon abhebt.

Es hat sich gezeigt, dass bei derartigen Betätigungselementen 10 mitunter Ablösungen der elastischen Schicht 18 vom metallischen Ventilteller 15 vorkommen, insbesondere bei zugleich auftretenden hohen Strömungsgeschwindigkeiten in der Ventildurchflussöffnung des nicht gezeigten Ventilgehäuses eines solchen, mit dem Bestätigungselement 10 ausgestatteten Ventils, insbesondere thermostatischen Ventils. Das Ablösen der elastischen Schicht 18 aus einem Elastomer hat folgende Ursachen. Bei der metallischen Gestaltung des Gehäuses 11 und des Ventilgliedes 14 und der damit vorhandenen elektrisch leitenden Verbindung zwischen diesen ergibt sich ein galvanisches Element. Aufgrund elektrochemischer Vorgänge (Stromfluss vom unedlen zum edlen Metall) ergibt sich ein elektrochemisches Potential und somit ein Stromfluss zwischen dem Ventilteller 15 und dem Gehäuse 11. Dies hat zur Folge, dass die Haftvermittlerschicht 19 zwischen Ventilteller 15 und elastischer Schicht 18 sich auflöst und dabei ihre haftende Funktion verliert, so dass sich die Schicht 18 vom Ventilteller 15 ablöst.

Diese Wirkungen und Nachteile werden erfindungsgemäß nun dadurch beseitigt, dass das metallische Ventilglied 14 und das metallische Betätigungselement 10 derart in Bezug zueinander elektrisch isoliert ausgebildet sind, dass die Bildung eines galvanischen Elements (elektrochemischen Potentials) zwischen diesen unterbunden ist. Dies ist im einfachsten Fall zum Beispiel durch einen aus Kunststoff bestehenden Ventilteller 15 und/oder dadurch erreicht, dass das Gehäuse 11 des Betätigungselements 10 aus Kunststoff gebildet ist. Stattdessen kann zwischen dem Ventilglied 14 und dem Betätigungselement 10, insbesondere dessen Gehäuse 11, auch eine elektrische Isolierung vorgesehen sein. Zum Beispiel kann das Ventilglied 14 elektrisch isoliert sein derart, dass keine elektrisch leitende Verbindung zwischen dem Ventilglied 14 und dem Gehäuse 11 besteht. Die Isolierung kann zum Beispiel im Bereich des Zylinderabschnitts 16 des Ventilgliedes 14 vorgesehen sein. Stattdessen oder zusätzlich dazu kann auch das Betätigungselement 10, insbesondere dessen Gehäuse 11, elektrisch isoliert sein, und zwar zumindest dort, wo das Ventilglied 14 Berührungskontakt mit dem Gehäuse 11 des Betätigungselements 10 hat. Auch dadurch wird eine elektrisch leitende Verbindung zwischen dem Ventilglied 14 und dem Gehäuse 11 unterbunden.

Verantwortlich für die Ausbildung eines galvanischen Elements kann je nach Gestaltung der Schicht 18 auch eine elektrisch leitende Verbindung zwischen der aus elastischem Material bestehenden Schicht 18 und dem Gehäuse 11 unmittelbar oder vermittels des Ventilgliedes 14 sein; denn häufig ist einer Schicht 18 aus einem Elastomer ein größerer Anteil von Ruß als Füllstoff beigemischt, der die Elastomerbeschichtung elektrisch leitend macht. Um auch insoweit die Bildung eines galvanischen Elements zu vermeiden, sieht die Erfindung vor, dass die Schicht 18 als elektrisch nicht leitende Schicht ausgebildet ist. Dies ist zum Beispiel erreicht, wenn die Schicht 18 aus einem elastischen Material mit elektrisch nicht leitenden Füllstoffen, wie Silikaten, Kreide od. dgl., versehen ist.

Von Vorteil kann es ferner sein, wenn die Haftvermittlerschicht 19, die zum Haften der Schicht 18 aus elastischem Material auf den metallischen Ventilteller 15 aufgebracht ist, als nicht leitende Schicht ausgebildet ist, so dass dadurch eine elektrische Isolierung zwischen der Schicht 18 und dem metallischen Ventilteller 15 geschaffen ist.

Bei dem in Fig. 2 gezeigten zweiten Ausführungsbeispiel sind für die Teile, die dem ersten Ausführungsbeispiel entsprechen, gleiche Bezugszeichen verwendet, so dass dadurch zur Vermeidung von Wiederholungen auf die Beschreibung des ersten Ausführungsbeispieles Bezug genommen ist.

Beim zweiten Ausführungsbeispiel ist der metallische Ventilteller 15 des Ventilgliedes 14 mit einer elektrisch nicht leitenden Schicht 21 versehen.

Somit wird auf unterschiedliche Weise bei einem thermostatischen Betätigungselement 10, das für ein insbesondere thermostatisches Ventil ausgebildet ist, gewährleistet, dass die elastische Schicht 18 des Ventilgliedes 14 dauerhaft haftet. Die Gefahr etwaiger Ablösungen ist gebannt. Somit ergibt sich eine lange Lebensdauer des Betätigungselements 10 mit entsprechend großer Funktionsdauer und dabei jeweils zuverlässigem Betrieb. Ersichtlich ist der Aufwand, der zur Unterbindung eines galvanischen Elements getroffen wird, sehr gering. Der Aufwand fällt kaum in Gewicht im Verhältnis zu der erheblich gesteigerten Lebensdauer des Bestätigungselements 10, was zugleich eine Kostenersparnis zur Folge hat.

## Patentansprüche

1. Ventil, insbesondere thermostatisches Ventil, das auf einem Betätigungselement (10) ein davon betätigtes Ventilglied (14) aufweist, welches auf einem Träger (15) eine Schicht (18) aus einem elastischen Material für die Abdichtung gegenüber einer Ventilsitzfläche eines Ventilgehäuses aufweist, wobei das Ventilglied (14) und das metallische Betätigungselement (10), insbesondere dessen Gehäuse (11), derart in Bezug zueinander elektrisch isoliert ausgebildet sind, dass die Bildung eines galvanischen Elements zwischen diesen unterbunden ist,
**dadurch gekennzeichnet,**
**dass** die Schicht (18) aus elastischem Material als elektrisch nicht leitende, mit elektrisch nicht leitenden Füllstoffen versehene Schicht ausgebildet ist.

2. Ventil nach Anspruch 1,
**dadurch gekennzeichnet,**
**dass** zwischen dem Ventilglied (14) und dem Betätigungselement (10), insbesondere dessen Gehäuse (11), eine elektrische Isolierung vorgesehen ist.

3. Ventil nach Anspruch 1 oder 2,
**dadurch gekennzeichnet,**
**dass** das Ventilglied (14) und/oder das Betätigungselement (10), insbesondere dessen Gehäuse (11), elektrisch isoliert ist.

4. Ventil nach Anspruch 1,
**dadurch gekennzeichnet,**
**dass** die Füllstoffe aus Silikaten, Kreide od. dgl. gebildet sind.

5. Ventil nach einem der Ansprüche 1 bis 3,
**dadurch gekennzeichnet,**
**dass** der metallische Träger (15) des Ventilgliedes (14) mit einer elektrisch nicht leitenden Schicht (21) versehen ist.

6. Ventil nach einem der Ansprüche 1 bis 5,
**dadurch gekennzeichnet,**
**dass** der metallische Träger (15) des Ventilgliedes (14) eine elektrisch nicht leitende Haftvermittlerschicht (19) aufweist, mittels der die Schicht (18) aus elastischem Material am Träger (15) haftet.

7. Ventil nach einem der Ansprüche 1 bis 6,
**dadurch gekennzeichnet,**
**dass** die Schicht (18) aus elastischem Material aus einem Elastomer gebildet ist, mit dem der metallische Träger (15) des Ventilgliedes (14) umspritzt ist.

8. Ventil nach einem der Ansprüche 1 bis 7,
**dadurch gekennzeichnet,**
**dass** der metallische Träger (15) des Ventilgliedes (14) aus einem Ventilteller gebildet ist.

## Claims

1. Valve, in particular a thermostatic valve, which has, on an actuating element (10), a valve member (14) which is actuated by said actuating element (10) and which has, on a support (15), a layer (18) made of an elastic material for sealing relative to a valve seat surface of a valve housing, the valve member (14) and the metallic actuating element (10), in particular its housing (11), being designed to be electrically insulated with respect to one another in such a way that the formation of a galvanic element between them is prevented, **characterized in that** the layer (18) made of elastic material is designed as an electrically non-conductive layer provided with electrically non-conductive fillers.

2. Valve according to Claim 1, **characterized in that** an electrical insulation is provided between the valve member (14) and the actuating element (10), in particular its housing (11).

3. Valve according to Claim 1 or 2, **characterized in that** the valve member (14) and/or the actuating element (10), in particular its housing (11), are/is electrically insulated.

4. Valve according to Claim 1, **characterized in that** the fillers are formed from silicates, chalks or the like.

5. Valve according to one of Claims 1 to 3, **characterized in that** the metallic support (15) of the valve member (14) is provided with an electrically non-conductive layer (21).

6. Valve according to one of Claims 1 to 5, **characterized in that** the metallic support (15) of the valve member (14) has an electrically non-conductive adhesion promoter layer (19), by means of which the layer (18) made of elastic material adheres to the support (15).

7. Valve according to one of Claims 1 to 6, **characterized in that** the layer (18) made of elastic material is formed from an elastomer, with which the metallic support (15) of the valve member (14) is encapsulated by moulding.

8. Valve according to one of Claims 1 to 7, **characterized in that** the metallic support (15) of the valve member (14) is formed from a valve disc.

## Revendications

1. Soupape, en particulier soupape thermostatique, qui présente sur un élément d'actionnement (10) un organe de soupape (14) actionné par celui-ci, qui comporte sur un support (15) une couche (18) en une matière élastique pour l'étanchéité par rapport à une surface de siège de soupape d'un corps de soupape, dans laquelle l'organe de soupape (14) et l'élément d'actionnement métallique (10), en particulier son boîtier (11), sont électriquement isolés l'un par rapport à l'autre, de telle manière que la formation d'un élément galvanique entre ceux-ci soit empêchée, **caractérisée en ce que** la couche (18) en matière élastique est une couche électriquement non conductrice pourvue de substances de charge électriquement non conductrices.

2. Soupape selon la revendication 1, **caractérisée en ce qu'**il est prévu une isolation électrique entre l'organe de soupape (14) et l'élément d'actionnement (10), en particulier son boîtier (11).

3. Soupape selon la revendication 1 ou 2, **caractérisée en ce que** l'organe de soupape (14) et/ou l'élément d'actionnement (10), en particulier son boîtier (11), est électriquement isolé.

4. Soupape selon la revendication 1, **caractérisée en ce que** les substances de charge sont formées de silicates, de craie ou analogues.

5. Soupape selon l'une quelconque des revendications 1 à 3, **caractérisée en ce que** le support métallique (15) de l'organe de soupape (14) est pourvu d'une couche électriquement non conductrice (21).

6. Soupape selon l'une quelconque des revendications 1 à 5, **caractérisée en ce que** le support métallique (15) de l'organe de soupape (14) comporte une couche d'accrochage électriquement non conductrice (19), au moyen de laquelle la couche (18) en matière élastique adhère au support (15).

7. Soupape selon l'une quelconque des revendications 1 à 6, **caractérisée en ce que** la couche (18) en matière élastique est formée en un élastomère, avec lequel le support métallique (15) de l'organe de soupape (14) est enrobé par projection.

8. Soupape selon l'une quelconque des revendications 1 à 7, **caractérisée en ce que** le support métallique (15) de l'organe de soupape (14) est formé par un disque de soupape.
